# EUROPEAN PATENT SPECIFICATION

(11) **EP 1 221 684 B1**
(45) Date of publication and mention of the grant of the patent: **03.05.2006**
(21) Application number: 00126660.0
(22) Date of filing: 05.12.2000
(51) Int. Cl.: G08G 1/0968, G01S 13/82

(54) **A method, system and portable device for locating a vehicle**
Verfahren, System und tragbare Vorrichtung zur Ortung eines Fahrzeuges
Procédé, système et dispositif portable de localisation d'un véhicule

(43) Date of publication of application: 10.07.2002
(73) Proprietor: SIEMENS AKTIENGESELLSCHAFT, 80333 München (DE)
(72) Inventor: Jannot, Christian, 78120 Sonchamp (FR)

(56) References cited:
- WO-A-00/34933
- DE-A- 19 820 921
- DE-A- 19 832 078
- US-A- 4 673 921

## Description

The invention relates to a method, system and portable device for localizing a motor vehicle through wireless communication ranging beyond the line-of-sight through between the vehicle and the device that also displays the localizing information, including vehicle identification. In particular such method, system and portable device allow a person to localize a motor vehicle before driving, by following the steps of:
setting up a wireless communication between a finder station and the motor vehicle in question, said communication including a vehicle identification signal;
in said motor vehicle, transmitting a signal to said finder station for therewith allowing an operator of said finder station to localize the vehicle in question.

Consumers have been feeling the need to localize their motor vehicle before driving. Various situations occur where such localizing is not immediately self-evident, either because the vehicle is not instantaneously visible through darkness or distance, or because it is not recognized through the presence of many other more or less similar motor vehicles. Various systems have been designed to cope with this problem. A well-known system has a portable station that emits an infrared signal to the motor vehicle, whereupon the motor vehicle will emit some sound upon receiving the signal, and also blink with one or more lights, such as the tail lights or direction indicators. Certain situations render this feature less than optimum, such as when the distance to the vehicle is too large to render the lights or sounds effective, or when the operator in question would not (yet) like bystanders to know what actually is his target vehicle. The present inventor has recognized that present day digital car electronics will present a host of advanced features that may profitably be used for indicating to the operator the actual location of the vehicle, and in particular, where the communication would generally remain a private affair to the operator alone.

By itself, various systems have come into use for in a large area determining the actual location of the vehicle, such as European Patents EP 279 834 B1 and EP 299 848 B1. Such systems are based on communicating between the vehicle and multiple support stations that are wide apart, so that the vehicle position can be calculated on the basis of various such communications in parallel, and subsequently be matched with applicable map information. Such systems have been developed for assisting a driver in navigating the vehicle, executing fleet management, and implementing various functions on a geographically large scale, rather than for allowing a driver to immediately finding the vehicle.

German Patent Application DE 4 321 417 discloses a system to find back a stolen vehicle through communicating between the vehicle and a system of multiple receivers that systematically cover a target area. The present invention solves a different problem, i.e. the finding back of a motor vehicle that is parked in what roughly could be termed "walking distance".

German Patent Application DE 1 960 375 discloses a system to find back a vehicle, wherein a portable receiver is being triggered for receiving an information that is specific for the vehicle in question after having been called up from a data base. The present invention also wants information that can be used for immediately locating the vehicle.

US 4 673 921 A discloses an apparatus for finding the location of a car within a vast area and a car-location system comprising a portable transmitter-receiver unit and a car-mounted transmitter-receiver unit. In response to a car-locating instruction, the portable unit transmits a transmitting code and demodulates any received signal into a response code. The response code is compared with a first prescribed response code and a receiving signal level is displayed when the response code is identical to the first prescribed response code. The car-mounted unit receives the transmitting code from the portable unit and the received transmitting code is compared to a transmitting code set in the car-mounted unit. The car-mounted unit transmits a response signal to the portable unit when the received transmitting code is identical to the transmitting code set in the car-mounted unit.

DE 198 20 921 A1 discloses a mobile transponder for a vehicle with an antenna with a three-dimensional directional characteristic and displaying means for displaying a direction of a signal transmitted from the vehicle relative to the mobile transponder.

DE 198 32 078 A1 discloses a method and an apparatus for locating a vehicle. A transmitter-receiver unit is mounted in the vehicle and is connected to signaling devices in the vehicle. A mobile transmitter-receiver unit on request transmits a search signal comprising a vehicle identification and control information for activating signaling devices in the vehicle. The mobile transmitter-receiver unit is designed as a direction finding device for tracking a direction finding signal that is transmitted by a signaling device of the vehicle after activation.

In consequence, amongst other things, it is an object of the present invention to present localizing information to the operator who may be separated from the vehicle by more than a few meters, but on the other hand, to immediately indicate to the operator a location signal. In principle, such could be effected by having a GPS device located both in the portable device and also in the vehicle, and by determining the distance vector through subtracting the two positions found. In principle, this would work well, because both positions so determined would have many equal contributions in common from systematic time variant error causes. On the other hand, the localizing should preferably also be effective under indoor conditions, where GPS is less than perfect.

Now therefore, according to one of its aspects the invention is characterized in that
said communication ranges to locations that are out of the line-of-sight from the operator,
said finder station is portable;
said transmitting implies localizing information regarding said motor vehicle for on the basis thereof displaying on said finder station an actual location of said motor vehicle relative to said finder station,
said localizing information contains direction data and an elevation information.

The invention also relates to a system arranged for practicing the invention to allow a person to localize a motor vehicle before driving, said system comprising:
wireless communication means for setting up a wireless communication between a finder station and the motor vehicle in question, said communication including a vehicle identification signal;
in said motor vehicle, transmitting means for transmitting a signal to said finder station for therewith allowing an operator of said finder station to localize the vehicle in question;
said communication ranges to locations that are out of the line-of-sight from the operator,
said finder station is portable;
said transmitting means imply transmitting localizing information regarding said motor vehicle for on the basis thereof displaying on displaying means provided in said finder station an actual location of said motor vehicle relative to said finder station
said localizing information contains direction data and an elevation information.

Preferably, said communication is effected by broadcast RF.

Said localizing information may contain distance data and/or vehicle identification data (CIC).

Preferably, said localizing information is calculated in said finder station.

In an alternative embodiment of the invention, said motor vehicle sends on a regular basis information concerning its identification (CIC).

In another preferred embodiment of the invention, said finder station scans an RF band to capture a signal sent by the vehicle transmitter, determines the location of the vehicle, verifies its identification and provides associated information to the operator on a small display.

Preferably, said displaying contains a direction pointer and/or said displaying allows indicating a distance selectively in one of at least two measurement systems.

The invention furthermore relates to a motor vehicle comprising a device arranged for practicing the invention as well as to a portable device arranged for practicing the invention.

Further advantageous aspects of the invention are recited in dependent Claims, that should determine the scope of the invention, to which the embodiments discussed hereinafter should only provide an illustration.

These and further aspects and advantages of the invention will be discussed more in detail hereinafter with reference to the disclosure of preferred embodiments, and in particular with reference to the appended Figures that show:
- Fig: 1:: an overall geographic situation sketch of the invention;
- Fig. 2:: a functional model of the Carfinder Receiver;
- Fig: 3.: a functional model of the Carfinder Broadcaster;
- Fig. 4a-4d.: various information formats for presenting the localizing information.

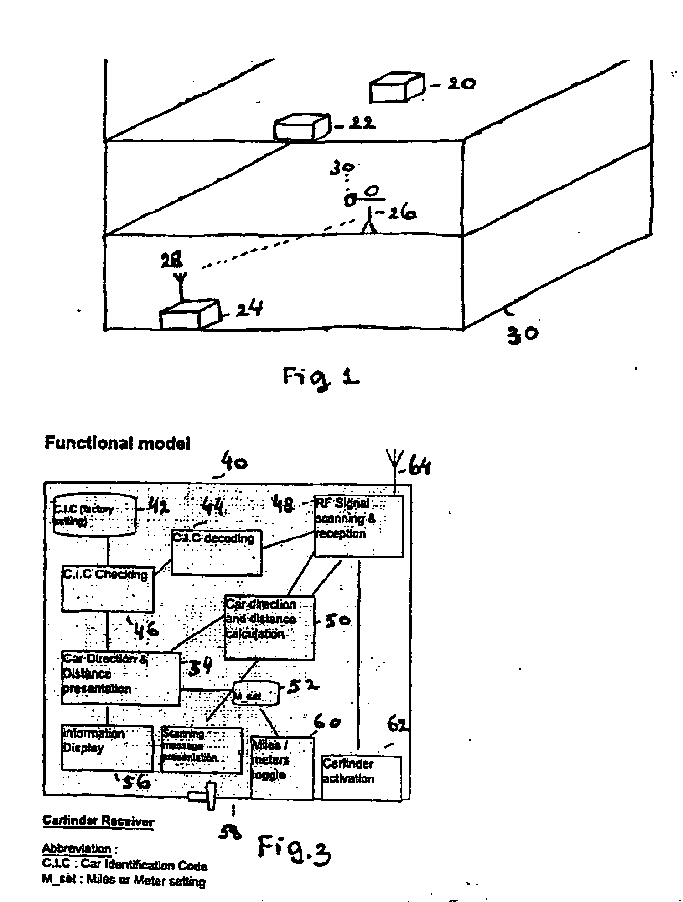

Figure 1 illustrates an overall geographic situation sketch of the invention. User person 26 wants to find back his car **24** that is located on the lowest floor of multi-store parking facility or "Parkhaus" **20**. The person is however on the first floor, and in consequence would never be able to see the car in question. Moreover, the size of each respective floor could be appreciable as well, and the overall number of vehicles **20, 22, 24** could be many hundreds or more. Moreover, lighting conditions are generally rather miserable, time is scarce, and security is often less than optimum. In consequence, IR transmission between the person and the vehicle will often be insufficient, and therefore, recourse is taken to broadcast waves that are not limited to line-of-sight conditions. As shown, the person has a portable device **30**, whereas the vehicle has an antenna **28** interconnected to the vehicle's internal electronic systems. The problem of finding the vehicle may exist in various other situations, such as in a flat but large parking lot of a shopping mall, in an ancient city with many winding streets, and with various seasonal conditions, such as fogs, heavy rains, and the like.

Now, the preferred embodiment of the present invention allows to localize the vehicle through three key parameters:
1. Vehicle direction or bearing from the operator's actual position (direct pointer to the car);
2. Vehicle distance from operator to current position (in metres, miles, or other);
3. Vehicle identification, such as given by its license plate, to localize the wanted vehicle, and not an arbitrary different one instead.

Figure 2 illustrates a functional model of the Carfinder Broadcaster **70**, that is located in the vehicle **24**. The subsystems thereof are as follows. Antenna **72** may be shared with various other antenna-based electronics of the vehicle, such as radio, GPS, fleet control, and others. Block **74** indicates the RF signal broadcasting function that corresponds to the amplification and transmitting of the RF signal at a field strength that is sufficient for the application and the applicable receiver sensitivity. Block **78** represents a solid state memory for storing a Car Identification Code (**CIC**) that may have been set either during the manufacturing process or at some later instant. Block **76** represents the RF digital signal coding preparation that has three sub-functions. The first sub-function is the ***extraction*** of the CIC from memory **78**, that may be of an EEPROM type or any other suitable type. The second sub-function is the ***encoding*** of the CIC into a suitable form, so that it cannot be recognized or decoded by another person. This may be effected by a suitable cypher, such as DES, RSA, or other. On the other hand, the CIC could be stored in coded form already. Furthermore, an error protection code may be effected, such as according to the well-known Reed-Solomon principle. Such protection feature would allow a receiver device to correct for various interference causes, and/or produce a signal indicating that the received data are unreliable. Finally, the third sub-function effects the ***modulating*** of an RF carrier signal with the information formed as discussed.

Figure 3 illustrates a functional model of the Carfinder Receiver **40**, that has the following functional blocks: CIC storage, for example as a four-byte code such as FAC4 **42,** CIC decoding **44,** CIC checking **46,** RF Signal scanning and reception **48,** vehicle direction and distance calculation **50,** M_set (miles or meters setting) **52,** vehicle direction and distance presentation **54,** information display **56,** scanning message presentation **58,** miles/meters toggle **60,** carfinder activation **62** and aerial **64.** The operation is as follows. Carfinder activation such as by a manual signal from the operator **62** corresponds to receiving a power on signal. It will immediately launch the RF Signal Scanning and Reception functions, the Scanning Message Presentation function, and a Roger bleep for outputting on the portable receiver device. The RF scanning and Reception function **48** corresponds to the antenna reception function of the signal, its demodulating and decoding functions, in order to obtain the above three relevant data elements: the direction of the vehicle, the distance of the vehicle, and the coded CIC. The first two may be calculated as based on various effective approaches. A first approach is based on the actually received field strength versus a calibration quantity determined very near the vehicle. A second approach is based on measuring an RF signal phase with respect to a standard signal. A third approach is based on measuring a frequency spectrum response that has attenuation factors being dependent both on the actual frequency and on the distance. Relative attenuations will then give indications on the distance.

The direction may be found by including in the portable device a gyroscopic device, and by moving the device in various directions, so that a peak-detection mechanism would detect the direction for maximum signal reception. This would give the actual direction of the vehicle. It should be recognized that at larger distances from the vehicle the actual direction need generally not be measured with great accuracy, as long as the operator will be taught to move in a direction that would diminish the distance to the vehicle. If the actual distance were less than, say, ten meters, the conventional feature of the blinking lights could well take over, if preferred. The determination of the elevation may be executed with even less accuracy, because the operator would need only a three-valued information (up-level-down), because in situations such as in Figure 1 only discrete amounts of ascending/descending are feasible. Various other possibilities for determining distance and/or direction will be recognized by persons skilled in the art. During the scanning process, a roger bleep, of the same nature as used with a portable telephone will continually and repetitively be generated for audio output on the carfinder receiver. If preferred, a mute feature may be built in. After a preset time interval, deactivation of the portable device may be automatic.

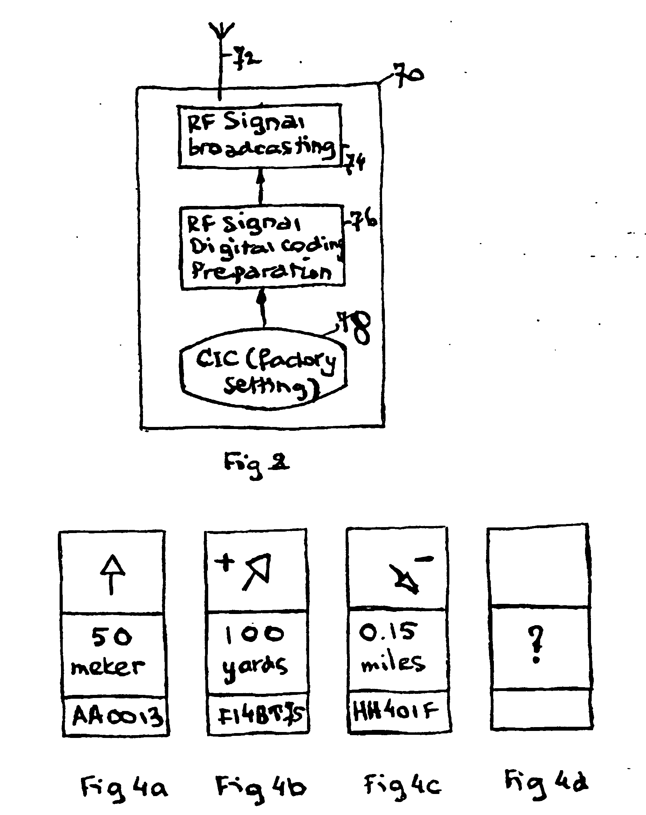

The CIC decoding function **44** will calculate the CIC as based on the received coded CIC. For this reason, a decoding key may be stored together with the factory-stored CIC. The CIC checking function **46** verifies the received and calculated or decoded CIC with the one stored in the memory of the receiver. The Car Direction and Distance Calculations **50** contain necessary algorithms to calculate the direction and the distance in miles or meters according to output signals of the RF signal Scanning and Reception function. The Meters/Miles toggle function **60** will be actuated by a long press, such as >5 seconds, to reversibly toggle between the meters and miles calculations, respectively, and the associated automatic updating on the display. The Car Direction and Distance presentation **54** will be effected on the display device **56** that may be of an arbitrary suitable type, such as LCD. The coding of the various information formats will be discussed with reference to Figures 4a-4d.

Figures 4a-4d illustrate various information formats for presenting the localizing information to the operator. The Figures all illustrate a display that has a comparable size as generally associated to a portable telephone. The lowest field of the display in Figure 4a indicates the actually received vehicle identification number, in this case a special Netherlands indication. The middle field shows the distance, in this case 50 meters. The top field of the display shows the direction of the vehicle. While assuming that the portable device is kept more or less horizontally, the arrow pointer indicates that the vehicle is straight ahead.

Figure 4b has similar fields that under the same assumption indicate a French license plate, a distance of 100 yards, a position that is forward, but to the right, and a positive elevation as shown by the plus sign, respectively. Thus, the vehicle is probably located at a higher story than the operator. The bearing indicated by the arrow may be digitized in a spacing of 30° apart. The elevation may be indicated as a three-valued quantity: positive, zero, or negative, and the thresholds may be for example ⁺/.20°.

Similarly, Fig 4c has a German license plate (from Hamburg), a distance in miles, a direction backwards to the right, and a negative elevation. Figure 4d indicates a situation where no useable information has been received. Here, the arrow and elevation signals, as well as the car identification signal keep being suppressed. Furthermore, a blinking "000" indication is displayed by the scanning message presentation subsystem 58 in the distance field if no data have become available yet during the scanning process. If the vehicle is not found, such as after scanning for ten seconds, no message will be displayed at all anymore. This is effected from a positive and optimistic starting point, so that for example, a certain fraction of the localizing messages received may be faulty such as through atmospheric interferences. This means that, for example, as long as three messages out of ten have been well received and are consistent, their information would represent a valid output. During the presumed approach of the vehicle by the prospective driver, the display, and in particular, the distance and/or direction fields thereof, will be continually updated as appropriate, for example, after three further consistent readings will have been received. Distance granularity may be e.g. in units of five or ten meters or similar.

The configuration may be changed with respect to the preferred embodiment discussed with reference to the drawings. The first transmission of the encoded CIC may for example be effected from the portable device, so that the vehicle should internally recognize the transmitted CIC as corresponding to its own identification data. This could render superfluous the transmission of the CIC from the vehicle to the portable device, which in fact raises the security level. Likewise, the direction and distance calculations could be effected by the vehicle itself, such as through two or three receivers that are relatively far apart in the extremities of the car, so that measurement would be open to triangulation algorithms. This would obviate the need for the swaying to and fro of the portable device discussed earlier. This would of course require a broadcast transmitter in the portable device. However, due to the limited operation time thereof, the accumulated battery drain would be largely inconsequential.

In that case, the sequence of operation steps could be as follows: 1. press button on portable device; 2. portable device sends alert signal; 3. vehicle electronics are activated; may send acknowledgement; 4. portable device sends encoded CIC; 5. vehicle electronics decode and compare CIC and generate an OK signal; 6. portable device emits signal for position determination; 7. vehicle electronics find range and direction; 8. vehicle sends range and direction signals to portable device; 9. portable device decodes CIC and displays this, long with informations received from vehicle. Note that in principle, the latter system would allow to use a single portable device with more than one vehicle, through suitable programming thereof. Of course, the functionality as discussed may combine with various other devices, such as portable telephones, credit cards, and the like, within a single housing. The latter feature would diminish the encumbrance felt by a user to have to carry continuously various different portable apparatuses.

## Claims

1. A method for allowing a person to localize a motor vehicle (24) before driving, said method comprising the steps of:
setting up a wireless communication between a finder station (30) and the motor vehicle in question (24), said communication including a vehicle identification signal;
in said motor vehicle (24), transmitting a signal to said finder station (30) for therewith allowing an operator of said finder station (30) to localize the vehicle in question;
said communication ranges to locations that are out of the line-of-sight from the operator,
said finder station (30) is portable;
said transmitting implies localizing information regarding said motor vehicle (24) for on the basis thereof displaying on said finder station (30) an actual location of said motor vehicle (24) relative to said finder station (30)
said localizing information contains direction data,
said method being **characterized in that** said localizing information contains an elevation information.

2. A method as claimed in Claim 1, being **characterized in that** said communication is effected by broadcast RF.

3. A method as claimed in Claim 1, being **characterized in that** said localizing information contains distance data.

4. A method as claimed in Claim 1, being **characterized in that** said localizing information contains vehicle identification data (CIC).

5. A method as claimed in Claim 1, being **characterized in that** said localizing information is calculated in said finder station (30).

6. A method as claimed in Claim 1, being **characterized in that** said said motor vehicle (24) sends on a regular basis information concerning its identification (CIC).

7. A method as claimed in Claim 1, being **characterized in that** said finder station (30) scans an RF band to capture a signal sent by the vehicle transmitter (74), determines the location of the vehicle (24), verifies its identification and provides associated information to the operator on a small display (56).

8. A method as claimed in Claim 1, being **characterized in that** said displaying contains a direction pointer.

9. A method as claimed in Claim 1, being **characterized in that** said displaying allows indicating a distance selectively in one of at least two measurement systems (52, 60).

10. A system arranged for practicing the invention as claimed in Claim 1, for allowing a person to localize a motor vehicle (24) before driving, said system comprising:
wireless communication means (72, 74, 64, 48) for setting up a wireless communication between a finder station (30) and the motor vehicle in question (24), said communication including a vehicle identification signal;
in said motor vehicle (24), transmitting means (74, 72) for transmitting a signal to said finder station (30) for therewith allowing an operator of said finder station to localize the vehicle in question;
said communication ranges to locations that are out of the line-of-sight from the operator,
said finder station (30) is portable;
said transmitting means imply transmitting localizing information regarding said motor vehicle (24) for on the basis thereof displaying on displaying means (54, 56) provided in said finder station (30) an actual location of said motor vehicle (24) relative to said finder station (30)
said localizing information contains direction data,
said system being **characterized in that** said localizing information contains an elevation information.

11. A system as claimed in Claim 10, being **characterized in that** said communication is effected by broadcast RF.

12. A system as claimed in Claim 10, being **characterized in that** said localizing information contains distance data.

13. A system as claimed in Claim 10, being **characterized in that** said localizing information contains vehicle identification data.

14. A system as claimed in Claim 10, being **characterized in that** said finder station (30) has calculating means (50) for calculating said localizing information.

15. A system as claimed in Claim 10, being **characterized in that** said said motor vehicle (24) has transmitting means (72, 74, 76, 78) for on a regular basis transmitting information concerning its identification.

16. A system as claimed in Claim 10, being **characterized in that** said finder station (30) comprises scanning means (48) for scanning an RF band to capture a signal sent by the vehicle transmitter (74), localizing means (50) for determining the location of the vehicle, verifying means (46) for verifying the identification of the vehicle and information presentation means (54) for presenting information to the operator on a small display (56).

17. A system as claimed in Claim 10, being **characterized in that** said displaying means (56) allow displaying of a direction pointer.

18. A system as claimed in Claim 10, being **characterized by** toggling means (60) for reversibly and selectively displaying a distance in one of at least two measurement systems.

## Revendications

1. Procédé permettant à une personne de localiser un véhicule à moteur (24) avant de le conduire, ledit procédé comprenant les étapes :
établir une communication sans fil entre une station de recherche (30) et le véhicule à moteur en question (24), ladite communication comprenant un signal d'identification de véhicule;
dans ledit véhicule à moteur (24), émettre un signal vers ladite station de recherche (30) pour permettre à un opérateur de ladite station de recherche (30) de localiser avec celui-ci le véhicule en question;
ladite communication porte vers des positions qui sont en dehors de la distance de visibilité directe de l'opérateur,
ladite station de recherche (30) est portable;
ladite émission implique une information de localisation concernant ledit véhicule à moteur (24) pour afficher sur ladite station de recherche (30), sur la base de cette information, une position réelle dudit véhicule à moteur (24) par rapport à ladite station de recherche (30),
ladite information de localisation contient des données directionnelles,
ledit procédé étant **caractérisé en ce que** ladite information de localisation contient une information d'élévation.

2. Procédé selon la revendication 1, **caractérisé en ce que** ladite communication est effectuée par radiodiffusion RF.

3. Procédé selon la revendication 1, **caractérisé en ce que** ladite information de localisation contient des données de distance.

4. Procédé selon la revendication 1, **caractérisé en ce que** ladite information de localisation contient des données d'identification de véhicule (CIC).

5. Procédé selon la revendication 1, **caractérisé en ce que** ladite information de localisation est calculée dans ladite station de recherche (30).

6. Procédé selon la revendication 1, **caractérisé en ce que** ledit véhicule à moteur (24) envoie, sur une base régulière, une information concernant son identification (CIC).

7. Procédé selon la revendication 1, **caractérisé en ce que** ladite station de recherche (30) balaye une bande RF pour capturer un signal envoyé par l'émetteur de véhicule (74), détermine la position du véhicule (24), vérifie son identification et fournit à l'opérateur une information associée sur un petit écran d'affichage (56).

8. Procédé selon la revendication 1, **caractérisé en ce que** ledit affichage contient un pointeur directionnel.

9. Procédé selon la revendication 1, **caractérisé en ce que** ledit affichage permet d'indiquer sélectivement une distance dans l'un d'au moins deux systèmes de mesure (52, 60).

10. Système configuré pour mettre en pratique l'invention selon la revendication 1, pour permettre à une personne de localiser un véhicule à moteur (24) avant de le conduire, ledit système comprenant :
des moyens de communication sans fil (72, 74, 64, 48) pour établir une communication sans fil entre une station de recherche (30) et le véhicule à moteur en question (24), ladite communication comprenant un signal d'identification de véhicule;
dans ledit véhicule à moteur (24), des moyens d'émission (74, 72) pour émettre un signal vers ladite station de recherche (30) afin de permettre à un opérateur de ladite station de recherche de localiser, grâce à celui-ci, le véhicule en question;
ladite communication porte vers des positions qui sont en dehors de la distance de visibilité directe de l'opérateur,
ladite station de recherche (30) est portable;
lesdits moyens d'émission impliquent l'émission d'information de localisation concernant ledit véhicule à moteur (24) pour afficher sur des moyens d'affichage (54, 56) prévus dans ladite station de recherche (30), sur la base de cette information, une position réelle dudit véhicule à moteur (24) par rapport à ladite station de recherche (30),
ladite information de localisation contient des données directionnelles,
ledit système étant **caractérisé en ce que** ladite information de localisation contient une information d'élévation.

11. Système selon la revendication 10, **caractérisé en ce que** ladite communication est effectuée par radiodiffusion RF.

12. Système selon la revendication 10, **caractérisé en ce que** ladite information de localisation contient des données de distance.

13. Système selon la revendication 10, **caractérisé en ce que** ladite information de localisation contient des données d'identification de véhicule.

14. Système selon la revendication 10, **caractérisé en ce que** ladite station de recherche (30) comporte un moyen de calcul (50) pour calculer ladite information de localisation.

15. Système selon la revendication 10, **caractérisé en ce que** ledit véhicule à moteur (24) comporte des moyens d'émission (72, 74, 76, 78) pour émettre, sur une base régulière, une information concernant son identification.

16. Système selon la revendication 10, **caractérisé en ce que** ladite station de recherche (30) comprend un moyen de balayage (48) pour balayer une bande RF afin de capturer un signal envoyé par l'émetteur de véhicule (74), un moyen de localisation (50) pour déterminer la position du véhicule, un moyen de vérification (46) pour vérifier l'identification du véhicule et un moyen de présentation d'information (54) pour présenter à l'opérateur une information sur un petit écran d'affichage (56).

17. Système selon la revendication 10, **caractérisé en ce que** ledit moyen d'affichage (56) permet l'affichage d'un pointeur directionnel.

18. Système selon la revendication 10, **caractérisé par** un moyen à bascule (60) pour afficher une distance de manière réversible et sélective dans l'un d'au moins deux systèmes de mesure.

## Patentansprüche

1. Verfahren, das es einer Person erlaubt, ein Kraftfahrzeug (24) vor dem Fahren zu lokalisieren, mit den folgenden Schritten:
Herstellen einer drahtlosen Kommunikation zwischen einer Finderstation (30) und dem fraglichen Kraftfahrzeug (24), wobei die Kommunikation ein Fahrzeugidentifikationssignal enthält;
in dem Kraftfahrzeug (24) Senden eines Signals zu der Finderstation (30), um es damit einem Bediener der Finderstation (30) zu erlauben, das fragliche Fahrzeug zu lokalisieren;
wobei die Kommunikation zu Orten reicht, die außerhalb der Sichtlinie von dem Bediener liegen,
wobei die Finderstation (30) tragbar ist;
wobei das Senden Lokalisierungsinformationen bezüglich des Kraftfahrzeugs (24) impliziert, um auf deren Basis auf der Finderstation (30) einen tatsächlichen Ort des Kraftfahrzeugs (24) relativ zu der Finderstation (30) anzuzeigen,
wobei die Lokalisierungsinformationen Richtungsdaten enthalten,
wobei das Verfahren **dadurch gekennzeichnet ist, daß** die Lokalisierungsinformationen Höheninformationen enthalten.

2. Verfahren nach Anspruch 1, **dadurch gekennzeichnet, daß** die Kommunikation durch ausgestrahlte HF bewirkt wird.

3. Verfahren nach Anspruch 1, **dadurch gekennzeichnet, daß** die Lokalisierungsinformationen Distanzdaten enthalten.

4. Verfahren nach Anspruch 1, **dadurch gekennzeichnet, daß** die Lokalisierungsinformationen Fahrzeugidentifikationsdaten (CIC) enthalten.

5. Verfahren nach Anspruch 1, **dadurch gekennzeichnet, daß** die Lokalisierungsinformationen in der Finderstation (30) berechnet werden.

6. Verfahren nach Anspruch 1, **dadurch gekennzeichnet, daß** das Kraftfahrzeug (24) regelmäßig Informationen bezüglich seiner Identifikation (CIC) sendet.

7. Verfahren nach Anspruch 1, **dadurch gekennzeichnet, daß** die Finderstation (30) ein HF-Band scannt, um ein durch den Fahrzeugsender (74) gesendetes Signal zu erfassen, den Ort des Fahrzeugs (24) bestimmt, seine Identifikation verifiziert und den Bedienern auf einer kleinen Anzeige (56) assoziierte Informationen angibt.

8. Verfahren nach Anspruch 1, **dadurch gekennzeichnet, daß** das Anzeigen einen Richtungszeiger umfaßt.

9. Verfahren nach Anspruch 1, **dadurch gekennzeichnet, daß** das Anzeigen eine selektive Distanzangabe in einem von mindestens zwei Meßsystemen (52, 60) erlaubt.

10. Zur Ausübung der Erfindung nach Anspruch 1 angeordnetes System, das es einer Person erlaubt, ein Kraftfahrzeug (24) vor dem Fahren zu lokalisieren, wobei das System folgendes umfaßt:
drahtlose Kommunikationsmittel (72, 74, 64, 48) zum Herstellen einer drahtlosen Verbindung zwischen einer Finderstation (30) und dem fraglichen Kraftfahrzeug (24), wobei die Kommunikation ein Fahrzeugidentifikationssignal umfaßt;
in dem Kraftfahrzeug (24) Sendemittel (74, 72) zum Senden eines Signals zu der Finderstation (30), um es damit einem Bediener der Finderstation zu erlauben, das fragliche Fahrzeug zu lokalisieren;
wobei die Kommunikation zu Orten reicht, die außerhalb der Sichtlinie von dem Bediener liegen,
wobei die Finderstation (30) tragbar ist;
wobei die Sendemittel ein Senden von Lokalisierungsinformationen bezüglich des Kraftfahrzeugs (24) implizieren, um auf deren Basis auf in der Finderstation (30) vorgesehenen Anzeigemitteln einen tatsächlichen Ort des Kraftfahrzeugs (24) relativ zu der Finderstation (30) anzuzeigen,
wobei die Lokalisierungsinformationen Richtungsdaten enthalten,
wobei das System **dadurch gekennzeichnet ist, daß** die Lokalisierungsinformationen Höheninformationen enthalten.

11. System nach Anspruch 10, **dadurch gekennzeichnet, daß** die Kommunikation durch ausgestrahlte HF bewirkt wird.

12. System nach Anspruch 10, **dadurch gekennzeichnet, daß** die Lokalisierungsinformationen Distanzdaten enthalten.

13. System nach Anspruch 10, **dadurch gekennzeichnet, daß** die Lokalisierungsinformationen Fahrzeugidentifikationsdaten enthalten.

14. System nach Anspruch 10, **dadurch gekennzeichnet, daß** die Finderstation (30) Berechnungsmittel (50) zum Berechnen der Lokalisierungsinformationen aufweist.

15. System nach Anspruch 10, **dadurch gekennzeichnet, daß** das Kraftfahrzeug (24) Sendemittel (72, 74, 76, 78) zum regelmäßigen Senden von Informationen bezüglich seiner Identifikation aufweist.

16. System nach Anspruch 10, **dadurch gekennzeichnet, daß** die Finderstation (30) Scanning-Mittel (48) zum Scannen eines HF-Bandes zum Erfassen eines durch den Fahrzeugsender (74) gesendeten Signals, Lokalisierungsmittel (50) zum Bestimmen des Orts des Fahrzeugs, Verifizierungsmittel (46) zum Verifizieren der Identifikation des Fahrzeugs und Informationspräsentationsmittel (54) zum Präsentieren von Informationen für den Bediener auf einer kleinen Anzeige (56) umfaßt.

17. System nach Anspruch 10, **dadurch gekennzeichnet, daß** die Anzeigemittel (56) ein Anzeigen eines Richtungszeigers erlauben.

18. System nach Anspruch 10, **gekennzeichnet durch** Umschaltmittel (60) zum umkehrbaren und selektiven Anzeigen einer Distanz in einem von mindestens zwei Meßsystemen.
